# EUROPÄISCHE PATENTSCHRIFT

(11) **EP 0 649 076 B1**
(45) Veröffentlichungstag und Bekanntmachung des Hinweises auf die Patenterteilung: **11.03.1998**
(21) Anmeldenummer: 94115907.1
(22) Anmeldetag: 08.10.1994
(51) Int. Cl.: G04C 3/00, G04G 1/00, H01Q 1/27, H01Q 7/06

(54) **Kleine Funkuhr**
Small radio controlled watch
Petite montre contrôlée par radio

(30) Priorität: 14.10.1993 DE 9315669 U
(43) Veröffentlichungstag der Anmeldung: 19.04.1995
(73) Patentinhaber: JUNGHANS UHREN GMBH, 78713 Schramberg (DE)
(72) Erfinder: Ganter, Wolfgang, D-78664 Eschbronn-Locherhof (DE); Neudecker, Johannes, Dr., D-91054 Erlangen (DE); Meier, Thomas, D-76137 Karlsruhe (DE)
(74) Vertreter: Hofmann, Gerhard, Dipl.-Ing. Patentassessor

(56) Entgegenhaltungen:
- EP-A- 0 382 130
- EP-A- 0 531 853
- DE-U- 8 432 847

## Beschreibung

Die Erfindung betrifft eine Funkuhr gemäß dem Oberbegriff des Anspruches 1.

Eine derartige Funkuhr ist aus der EP 0 531 853 A2 bekannt. Im Interesse eines kompakten Aufbaus, insbesondre als Funk-Armbanduhr, dient dort ein scheibenförmiger Kern der magnetischen Langwellen-Antenne selbst, abseits des als Spulenträger ausgebildeten Kernteiles, gewissermaßen als Werkplatte. Auf diese, und soweit erforderlich in diese hineinragend, sind das Räder- und Zeiger-Werk einschließlich dessen elektromotorischen Schritt-Antriebes sowie die elektronischen Schaltungen für den autonomen Uhrenbetrieb und für Anzeigekorrekturinformationen, die aus empfangenen und decodierten Zeittelegrammen gewonnen werden, montiert. Außerdem ist in den flachen Kern ein Aufnahmebereich für eine elektrooptische Digitalanzeige eingearbeitet. Um den Bearbeitungsaufwand am Ferrit- Kern zu reduzieren, können für die Räderwerks-Lagerung miniaturisierte Präzisions-Gußteile aus Kunststoff in den Kern eingesetzt sein.

Problematisch bei einem solchen Aufbau ist die Nähe einerseits der elektronischen Auswerteschaltung und andererseits des elektromechanischen Zeigerantriebes zur magnetischen Langwellenantenne in Form des Kernes mit seiner Antennenspule, da aus den elektronischen und elektromechanischen Kreisen herrührende elektromagnetische Störungen über die Antennenwirkung verstärkt rückgekoppelt werden können. Für eine störungsfreie Arbeitsweise ist deshalb der Betrieb einer so ausgestatteten Uhr bei erhöhter Empfangs-Feldstärke anzustreben, was aber den Einsatzbereich hinsichtlich der Entfernung vom Sender der Zeittelegramme einschränkt. Besonders kritisch sind elektrische Störungen, die vom Betrieb der Spannungswandlerschaltung für die Ansteuerung einer LCD-Anzeige ausgehen, weil der aus dem Frequenzteiler der autonomen zeithaltenden Schaltung der Uhr abgeleitete Takt für den Spannungswandler mit einer starken Oberwelle typischerweise in unmittelbarer Nähe der Sendefrequenz von 77,5 kHz des deutschen Zeitsenders DCF77 liegt. Dadurch kann das Empfangssignal so stark überlagert werden, daß die Information im empfangenen Zeittelegramm überhaupt nicht mehr auswertbar ist. Aber auch die getakteten Ströme im Prozessor für die Steuerung der Uhrenfunktionen rufen stark störende magnetische Wechselfelder hervor. Der Einbau elektromagnetischer Abschirmhauben zwischen der Antenne und den auf ihren Kern montierten Störstrahlern wäre nicht nur fertigungstechnisch sehr aufwendig, sondern würde außerdem zu einer starken Bedämpfung der Antenne führen, so daß die für den störungsfreien Betrieb der Uhr erforderliche Mindestfeldstärke am Empfangsort weiter ansteigen würde.

In Erkenntnis dieser Gegebenheiten liegt der Erfindung die Aufgabe zugrunde, eine Funkuhr gattungsgemäßer Art derart auszugestalten, daß ohne großen konstruktiven Zusatzaufwand und ohne unzumutbare Beeinträchtigung der Antennenleistung eine wirksame Unterdrückung der elektromagnetischen Störeinflüsse aus Funktionskomponenten, die in unmittelbarer Nähe des Antennenkernes selbst arbeiten, sichergestellt ist.

Diese Aufgabe ist erfindungsgemäß im wesentlichen dadurch gelöst, daß die gattungsgemäße Funkuhr die Merkmale des Hauptanspruches aufweist.

Nach dieser Lösung dient der Kern der magnetischen Langwellenantenne selbst weiterhin als Träger für die elektronischen und elektromechanischen Funktionsteile der Uhr, aber die wesentlichen Störer werden so von ihm umfaßt, daß ihre Störeinflüsse auf die Antennenspule sich weitestgehend geometrisch (vektoriell) selbst kompensieren. Grundsätzlich kann der das Werk einfassende und vom Zifferblatt abgedeckte Kern als Uhrgehäuse ausgestaltet sein. Im Hinblick auf gestalterische Variationsmöglichkeiten und Schutzmaßnahmen ist es aber zweckmäßiger, den Kern samt Werk in ein Umgehäuse aus elektrisch nichtleitendem und magnetisch nichtschirmendem Material einzuschalen.

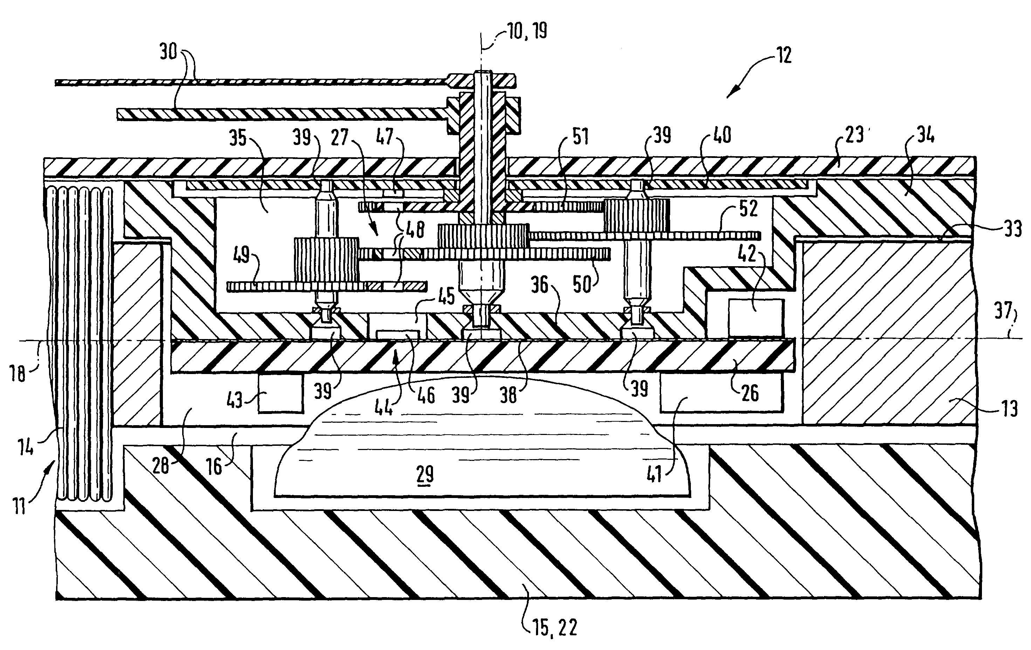

Weiterbildungen und zusätzliche Alternativen, sowie weitere Merkmale und Vorteile der Erfindung, ergeben sich aus den weiteren Ansprüchen und, auch unter Berücksichtigung der Darlegungen in nachgehefteter Kurzfassung, aus nachstehender Beschreibung eines in der Zeichnung unter Beschränkung auf das Wesentliche abstrahiert und nicht ganz maßstabsgerecht aber sehr stark vergrößert skizzierten bevorzugten Realisierungsbeispiels zur erfindungsgemäßen Lösung. Die einzige Figur der Zeichnung zeigt in abgebrochener Darstellung einen Längsschnitt durch das in den Antennenkern hineinverlegte Werk.

Die kapazitiv auf Resonanz abgestimmte magnetische Langwellen-Antenne 11 der bevorzugt als Armbanduhr ausgelegten Funkuhr 12 besteht aus einem großvolumigen flachen Ferrit-Kern 13 mit Antennen-Spule 14. Im Interesse einer hohen Antennenempfindlichkeit infolge großen Volumens füllt der scheibenförmige Kern 13 das Innere 16 eines flach-topfförmigen Kunststoff-Uhrgehäuses 15 im wesentlichen aus. Eine bezüglich der Hochachse 10 des Kerns 13 exzentrische Verjüngung dient als Trägerkörper für die Spule 14. Deren Spulenachse 18 weist auf die quer dazu verlaufende Werkachse 19.

Ein vom Gehäuse-Boden 22 abgelegener Bereich der ebenen Oberfläche 33 des Kernes 13 dient als Auflage für einen Flansch 34, der mit einem Zifferblatt 23 belegt ist. Der Flansch 34 umgibt die Öffnung eines aus Kunststoff gespritzten Topfes 35, welcher mit seinem Boden 36 in ein zentrales Loch 28 im Kern 13 bis in den Bereich seiner Mittenebene 37 hineinragt. Unter dem Topf-Boden 36 ist die Leiterplatte 26 für wenigstens die wichtigsten Komponenten der elektronischen Schaltungen zum autonomen zeithaltenden Betrieb der Funkuhr 12, für Empfang und Decodierung der absoluten Zeitinformationen, sowie für Überprüfung und erforderlichenfalls Korrektur der momentanen Zeitanzeige anhand der empfangenen aktuellen Zeitinformation, befestigt. Dabei liegt die im wesentlichen unbestückte aber mit den Verdrahtungs-Leiterbahnen 38 kaschierte Rückseite der Leiterplatte 26 flach unter dem Topf-Boden 36, der nur dort stufenförmig ansteigt, wo die Leiterplatte 26 auch auf der Kaschierungsseite Bauelemente trägt. Jedenfalls umgibt so der Kern 13 die Berandung der Hauptebene der Leiterplatte 26 mit ihren Bauelementen. Das Räder- und Zeiger-Werk 27 samt elektromechanischem Schrittmotor zur Bewegung der Zeiger 30 ist im Innern des Topfes 35 angeordnet, mit Lagerstellen 39 für Zapfenlager im Boden 36 und in einer die Topf-Öffnung unter dem Zifferblatt 23 überspannenden Brücke 40.

Eine Batterie 29 taucht gegenüberliegend, also von der Unterseite des Kernes 13 her und am Gehäuse-Boden 22 abgestützt, in das zur Werkachse 19 konzentrische Durchgangs-Loch 28 hinein.

Aus den durch die Leiterbahnen 38 zu den Bauelementen der Schaltung fließenden Strömen können so starke elektromagnetische Störungen für die Funktion der Antenne 11 herrühren, daß sie an sich wirksame, also elektrisch gut leitende und hoch-permeable Abschirmmaßnahmen bedingen. Denn bei dem integralen Aufbau können störende Einkopplungen nicht mehr durch das sonst übliche Einhalten eines konstruktiven Mindestabstandes zwischen der Leiterplatte 26 und der Antenne 11 ausgeschlossen werden. Allerdings sind die geometrische Ausgestaltung und der fertigungstechnische Einbau beispielsweise von Abschirmhauben sehr aufwendig, und die dämpfende Wirkung zusätzlicher Abschirmmaßnahmen direkt auf der magnetischen Antenne 11 führt dazu, daß diese unempfindlicher wird und somit ein korrekter Empfangsbetrieb nur noch bei höherer Empfangsfeldstärke, also etwa unter den besseren Empfangsgegebenheiten in größerer Nähe zum Sender, sicherstellbar ist.

Zu den von der Antenne 11 aufgenommenen Störungen tragen ganz wesentlich die elektromagnetischen Felder der Ströme bei, die durch die Leiterbahnen 38 der (Haupt-) Leiterplatte 26 und in den darauf angeordneten elektrischen Bauelementen fließen, insbesondere im Prozessor 41 für die Decodierung der Zeittelegramme und für die Überprüfung sowie Korrektur der aktuellen Zeitanzeige. Es hat sich aber gezeigt, daß diese Störeinflüsse gerade weitgehend wirkungslos werden, wenn die Ebene dieser Leiterbahnen 38 etwa in der Mittenebene 37 des scheibenförmigen Kernes 13 liegt, mit der vorzugsweise auch die Spulenachse 18 zusammenfällt, und die innerhalb des Kernes 13 gelegenen störaktiven Bauelemente außerdem möglichst weit entfernt von der Spule 14, also im diametral gegenüberliegenden Bereich des die Leiterplatte 26 und das Werk 27 aufnehmenden Durchgangs-Loches 28 im Kern 13, auf der Leiterplatte 26 angeordnet sind. Denn durch diese Zentrierung der Störquellen in der Spulenachse durchsetzen etwa gleichgroße Störfeldkomponenten über den Kern 13 die Spule 14 gerade gegensinnig, und bei der exzentrischen Anordnung im Loch 28 verläuft nur ein Teil der daher rührenden Magnetfelder auch durch den gegenüberliegenden Randbereich des Loches 28 und damit durch den benachbarten Bereich der Spule 14.

Wenn ein konzentrierter Störer, vor allem in Form eines Bauelementes mit getakteten internen Stromflüssen, außerdem noch in der Symmetrieebene der Spule 14, also zentriert zu ihrer Spulenachse 18 angeordnet werden kann, ist der Störeinfluß weiter reduziert, weil die magnetischen Feldkomponenten etwa quer zur Spulenachse verlaufen, also praktisch keine Windungsfläche durchsetzen. Allerdings würde es anschlußtechnische Probleme aufwerfen, ein solches Bauelement wie den Prozessor 41 in einer Durchbrechung der Leiterplatte 26 symmetrisch zur Spulenachse 18 und damit zur Ebene der Leiterbahnen 38 anzuordnen. Stattdessen ist es zweckmäßiger, ein weiteres über seine internen Ströme an sich störendes aktives Bauelement wie den integrierten Empfänger 42 etwa dem Prozessor 41 gegenüberliegend auf der Leiterplatte 26 anzuordnen, so daß daraus für die Gesamtheit der beiden Störer 41/42 dann eine etwa symmetrische Lage bezüglich der Spulenachse 18 resultiert. Konzentrierte passive Bauelemente 43 dagegen, wie etwa Prozessor- und Empfängerbeschaltungen, können auch in dichterer Annäherung an die Spule 14 von der Leiterplatte 26 aufgenommen werden.

Der stärkste Störer bei einer elektromechanisch betriebenen Uhr 12 ist allerdings die Feldspule des Schrittmotors. Auch dessen Stator wäre deshalb zweckmäßigerweise möglichst weit von der Spule 14 entfernt aber in der Ebene ihrer Achse 18 anzuordnen. Das ist bei einer im Durchmesser sehr klein bauenden, etwa als Armbanduhr ausgelegten Funkuhr 12 jedoch aus Platzgründen nicht realisierbar, zumal auch die getriebetechnische Anbindung zum Räder-Werk 27 gewährleistet sein muß. Deshalb wird der Schrittmotor zweckmäßigerweise seitlich neben dem Werk 27 im Innern des Topfes 35 aus elektrisch und magnetisch nichtleitendem Material angeordnet. In dieser unsymmetrischen Lage bezüglich der Antennenachse 18-37 erfolgt zwar keine geometrische Kompensation der vom Motor auf die Spule 14 einwirkenden Störfelder mehr. Wenn die Funkuhr 12 aber nur mit Minuten- und Stunden-Zeigern 30 ausgestattet ist, braucht pro Minute nur eine Schrittansteuerung des Werkes 27 aus dem Motor heraus zu erfolgen, in den restlichen 59 Sekunden einer Minute kann der Motor elektrisch abgeschaltet sein. Über den Prozessor 41, der auch den Motorbetrieb steuert, wird deshalb der Empfänger 42 für die Zeitdauer des Motorbetriebes stillgesetzt, der Empfangsbetrieb also auf die hinreichend lange Pausenzeit des Motorbetriebes beschränkt und auf diese Weise der vom Schrittmotor ausgehende Störeinfluß zwar nicht geometrisch kompensiert, aber ebenso wirksam elektrisch ausgeblendet.

Für die mechanische Halterung und elektrische Ansteuerung des Schrittmotors kann (in der Zeichnung nicht berücksichtigt) in der Ebene zwischen der Räderwerks-Brücke 40 und dem Zifferblatt 23 eine zusätzliche Leiterplatte angeordnet sein. Die liegt dann zwar auch nicht symmetrisch im Kern 13 oder bezüglich der Spulenachse 18, aber die störende Wirkung ihrer Ströme ist dann ja z. B. auf die Betriebszeitspanne des Motors beschänkt, in der nun der Empfänger 41 abgeschaltet ist. Auch im übrigen können über diese zusätzliche Leiterplatte Signale geführt werden, die nur einen seltenen Stromfluß bedingen, wie etwa von am Leiterplatten-Stirnrand gelegenen (und so durch das Uhren-Gehäuse hindurch betätigbaren) Tastschaltern.

Auch der Sender bzw. Empfänger einer Gabel-Lichtschranke 44 kann auf jener zusätzlichen Leiterplatte angeordnet sein, die bezüglich des Werkes 27 der Haupt-Leiterplatte 26 gegenüber und parallel zu dieser angeordnet ist. Das dazu komplementäre Element der Lichtschranke 44 ist auf der kaschierten Seite der Haupt-Leiterplatte 26 angeordnet und ragt in eine Durchbrechung 45 im Topf-Boden 36 hinein. Wenn es sich um das Sende-Empfangs-Element 46 einer Reflex-Lichtschranke 44 handelt, dann braucht an der Brücke 40 lediglich ein Reflektor 47 ausgebildet zu sein. Die Lichtschranke 44 ist durchgängig, wenn Blenden-Löcher 48 untereinander koaxial fluchten, die im (vom Motorritzel angetriebenen) Zwischenrad 49, im von dessen Ritzel angetriebenen Minutenrad 50 und im Stundenrad 51 ausgebildet sind, mit getrieblicher Kopplung zwischen den beiden Letzgenannten über das von der Lichtschranke 44 nicht erfaßte Wechselrad 52. Diese Blenden-Löcher 48 fluchten gerade dann und nur dann, wenn die Zeiger 30 in einer definierten Referenzrichtung (vorzugsweise beide auf die 12-Uhr-Marke ausgerichtet) stehen. Aus dieser Referenzstellung heraus wird im Prozessor 41 dann das Einschwenken der Zeiger 30 in die Anzeigestellung überwacht, die dem aktuellen und über Funk verifizierten Zeitpunkt entspricht, wie in der DE-PS 3510861 auch für anders ausgelegte Räderwerke (beispielsweise mit zwei elektrisch gekoppelten Motoren) näher beschrieben.

So ist ohne die Wirkung der Antenne 11 bedämpfende zusätzliche mechanische Abschirmungen ein extrem kompakter Aufbau für die Funkuhr 12 geschaffen, bei der das Werk 27 und der E-Block (beschaltete Leiterplatte 26) ins Zentrum des Kernes 13 neben der Antennenspule 14 eingesenkt sind, mit geometrischer Anordnung der Schaltungsteile, von denen nicht nur sporadisch elektromagnetische Störeinflüsse ausgehen, dahingehend, daß diese Störeinflüsse sich in der resultierenden Durchsetzung der Spule 14 weitestgehend gerade kompensieren.

## Patentansprüche

1. Kleine Funkuhr (12) mit elektromagnetischer Antenne (11), deren Kern (13) eine Spule (14) trägt, die einen Empfänger (42) für Zeittelegramme speist, aus denen ein Prozessor (41) die ansonsten autonome Zeitanzeige (Zeiger 30) erforderlichenfalls korrigiert, wobei der Kern (13) auch Träger von Schaltungs- und Anzeige-Komponenten ist,
dadurch gekenntzeichnet,
daß eine Leiterplatte (26) zur Verschaltung aller wesentlichen Störquellen der elektrischen Schaltung in ein neben der Spule (14) im Kern (13) quer zur Spulenachse (18) ausgebildetes Loch (28) eingesenkt ist, wobei die Ebene der Leiterbahnen (38) der Leiterplatte (26) etwa in der Mittenebene (37) des Kernes (13) liegt.

2. Funkuhr nach Anspruch 1,
dadurch gekennzeichnet,
daß die Spulenachse (18) etwa in der Ebene der Leiterbahnen (38) liegt.

3. Funkuhr nach Anspruch 1 oder 2,
dadurch gekennzeichnet,
daß elektrische Bauelemente, von deren Betrieb wesentliche elektromagnetische Störungen ausgehen, einander gegenüberliegend auf beiden Oberflächen der Leiterplatte (26) angeordnet sind.

4. Funkuhr nach einem der vorangehenden Ansprüche,
dadurch gekennzeichnet,
daß elektrische Bauelemente, von deren Betrieb wesentliche elektromagnetische Störungen ausgehen, im von der Spule (14) abgelegenen Bereich der Leiterplatte (26) angeordnet sind.

5. Funkuhr nach einem der voangehenden Ansprüche,
dadurch gekennzeichnet,
daß elektrische Bauelemente, von denen nur während sporadischen Betriebs wesentliche Störkomponenten ausgehen, abseits der Kern-Mittenebene (37) angeordnet aber nur in Betrieb gesetzt sind, wenn der Empfänger (42) für zu dekodierende Zeittelegramme abgeschaltet ist.

6. Funkuhr nach einem der vorangehenden Ansprüche,
dadurch gekennzeichnet,
daß die Leiterplatte (26) unter dem Boden (36) eines in den Kern (13) eingesenkten Topfes (35) aus elektrisch und magnetisch nicht-leitendem Material gehaltert ist.

7. Funkuhr nach einem der vorangehenden Ansprüche,
dadurch gekennzeichnet,
daß zur Halterung der Leiterplatte (26) ein in den Kern (13) eingreifender Topf (35) aus elektrisch und magnetisch nicht-leitendem Material vorgesehen ist, der mit einem in der Ebene der Topf-Öffnung umlaufenden Flansch (34) auf einer Oberfläche (33) des Kernes (13) unter dem Uhren-Ziffernblatt (23) aufliegt.

8. Funkuhr nach einem der vorangehenden Ansprüche,
dadurch gekennzeichnet,
daß ein in den Kern (13) eintauchender und mit seinem Boden (36) die Leiterplatte (26) tragender Topf (35) in seinem Innern ein Räder- und Zeiger-Werk (27) aufnimmt, das zwischen dem Topf-Boden (36) und einer die Topf-Öffnung überspannenden Brücke (40) gelagert ist.

9. Funkuhr nach einem der vorangehenden Ansprüche,
**dadurch gekennzeichnet,**
daß die Leiterplatte (26) mit einem Sende- und/oder Empfangs-Element (46) einer Lichtschranke (44) ausgestattet ist, die durch eine Durchbrechung (45) in einem die Leiterplatte (26) halternden Boden (36) hindurch Blenden-Löcher (48) in Rädern (49, 50, 51) des parallel zur Leiterplatte (26) angeordneten Werkes (27) erfaßt.

10. Funkuhr nach einem der vorangehenden Ansprüche,
**dadurch gekennzeichnet,**
daß eine zusätzliche Leiterplatte gegenüber der Kern-Mittenebene (37) versetzt für Stromkreise vorgesehen ist, die nur sporadisch und insbesondere gegenüber dem Betrieb des Empfängers (42) zeitlich versetzt in Betrieb sind.

11. Funkuhr nach einem der vorangehenden Ansprüche,
**dadurch gekennzeichnet,**
daß ihr Antennen-Kern (13) eine Leiterplatte (26) für wenigstens die wichtigsten Komponenten der elektronischen Schaltungen zum autonomen zeithaltenden Uhrenbetrieb für Empfang und Dekodierung absoluter Zeitinformationen sowie für Überprüfung und erforderlichenfalls Korrektur der momentanen Zeitanzeige trägt.

## Claims

1. Small radio-controlled timepiece (12) with electromagnetic aerial (11), whose core (13) carries a coil (14) which feeds a receiver (42) for time telegrams, from which a processor (41) corrects as necessary the otherwise autonomous time display (hands 30), the core (13) also being a carrier of circuit and display components,
characterized in that
a printed circuit board (26) for the wiring of all the significant disturbing sources of the electric circuit is sunk into a hole (28) which is formed next to the coil (14) in the core (13) at right angles to the axis (18) of the coil, the plane of the conducting tracks (38) of the printed circuit board (26) lying roughly on the median plane (37) of the core (13).

2. Radio-controlled timepiece according to Claim 1,
characterized in that
the axis (18) of the coil lies roughly on the plane of the conducting tracks (38).

3. Radio-controlled timepiece according to Claim 1 or 2,
characterized in that
electric components, whose operation produces considerable electromagnetic disturbances, are located opposite one another on both surfaces of the printed circuit board (26).

4. Radio-controlled timepiece according to one of the preceding claims,
characterized in that
electric components, whose operation produces considerable electromagnetic disturbances, are located in the area of the printed circuit board (26) away from the coil (14).

5. Radio-controlled timepiece according to one of the preceding claims,
characterized in that
electric components which only produce significant disturbing components during sporadic operation, are located away from the core's median plane (37) but only set in operation when the receiver (42) for time telegrams to be decoded is switched off.

6. Radio-controlled timepiece according to one of the preceding claims,
characterized in that
the printed circuit board (26) is fixed underneath the base (36) of a pot (35) which is sunk into the core (13) and is made of electrically and magnetically non-conducting material.

7. Radio-controlled timepiece according to one of the preceding claims,
characterized in that,
for fixing the printed circuit board (26), a pot (35) is provided which engages in the core (13) and is made of electrically and magnetically non-conducting material and which, by means of a flange (34) running round on the plane of the pot's opening, rests on a surface (33) of the core (13) underneath the face (23) of the timepiece.

8. Radio-controlled timepiece according to one of the preceding claims,
characterized in that
a pot (35), inserted into the core (13) and carrying the printed circuit board (26) by means of its base (36), accommodates in its interior a movement and dial train (27), which is mounted between the pot's base (36) and a bridge (40) spanning the pot's opening.

9. Radio-controlled timepiece according to one of the preceding claims,
characterized in that
the printed circuit board (26) is fitted with a transmitting and/or receiving element (46) of a light barrier (44) which detects, through an opening (45) in a base (36) holding the printed circuit board (26), diaphragm apertures (48) in wheels (49, 50, 51) of the mechanism (27) which is located parallel to the printed circuit board (26).

10. Radio-controlled timepiece according to one of the preceding claims,
characterized in that
an additional printed circuit board is provided offset in relation to the core's median plane (37) for circuits which are only sporadically in operation and in particular are time-offset in relation to the operation of the receiver (42).

11. Radio-controlled timepiece according to one of the preceding claims,
characterized in that
its aerial core (13) carries a printed circuit board (26) for at least the most important components of the electronic circuits for the autonomous time-keeping operation of the timepiece for reception and decoding of absolute items of time information as well as for checking and if necessary correcting the instantaneous time display.

## Revendications

1. Petite horloge radio (12) avec une antenne électromagnétique (11), dont le noyau (13) porte une bobine (14), qui alimente un récepteur (42) destiné à des télégrammes de temps, d'où un processeur (41) corrige en cas de nécessité l'affichage de temps (aiguille 30) qui, pour le reste, est autonome, le noyau (13) étant également le support des composants de commutation et d'affichage,
caractérisée en ce que,
une plaquette à circuit imprimé (26), destinée au branchement de toutes les sources parasites notables du circuit électrique, est noyée dans un trou (28), ménagé à côté de la bobine (14), dans le noyau (13), transversalement par rapport à l'axe de bobine (18), le plan des pistes conductrices (38) de la plaquette à circuits imprimés (26) étant situé à peu près dans le plan médian (37) du noyau (13).

2. Horloge-radio selon la revendication 1, caractérisée en ce que l'axe de bobine (18) est situé à peu près dans le plan des pistes conductrices (38).

3. Horloge-radio selon la revendication 1 ou 2, caractérisée en ce que composants électriques, du fonctionnement desquels partent des perturbations électromagnétiques notables, sont disposés les uns à l'opposé des autres sur les deux surfaces de la plaquette à circuits imprimés (26).

4. Horloge-radio selon l'une des revendication précédentes, caractérisée en ce que des composants électriques, du fonctionnement desquels partent des parasites électromagnétiques notables, sont disposés dans la zone, située à l'écart à la bobine (14), de la plaquette à circuits imprimés (26).

5. Horloge-radio selon l'une des revendications précédentes, caractérisée en ce que des composants électriques, dont partent des composantes parasites notables seulement pendant un fonctionnement sporadique, sont disposées à l'écart du plan médian de noyau (37) mais ne sont mis en fonctionnement que lorsque le récepteur (42) destiné aux télégrammes de temps à décoder est mis hors service.

6. Horloge-radio selon l'une des revendications précédentes, caractérisée en ce que la plaquette à circuits imprimés (16) est fixée sous le fond (36) d'un pot (35), noyé dans le noyau (13) et constitué d'un matériau non-conducteur de l'électricité et du magnétisme.

7. Horloge-radio selon l'une des revendications précédentes, caractérisée en ce que, pour assurer la fixation de la plaquette à circuit imprimé (26), est prévu un pot (35) s'engageant dans le noyau (13) et réalisé en un matériau non-conducteur de l'électricité du magnétisme, pot reposant, par une bride (34) faisant le pourtour dans le plan de l'ouverture de pot, sur une surface (33) du noyau (13), sous le cadran d'horloge (23).

8. Horloge-radio selon l'une des revendications précédentes, caractérisée en ce qu'un pot (35), plongeant dans le noyau (13) et portant avec son fond (36) la plaquette à circuits imprimés (26), reçoit intérieurement un mécanisme à roues et à aiguilles (27), qui est monté entre le fond de pot (36) et un pont (40) chevauchant l'ouverture de pot.

9. Horloge-radio selon l'une des revendications précédentes, caractérisée en ce que la plaquette à circuits imprimés (26) est équipée d'un élément émetteur et/ou récepteur (46), d'une barrière photoélectrique (44), qui assure une détection, à travers une traversée (45) ménagée dans un fond (36) fixant la plaquette à circuit imprimé (26), en passant dans des trous d'écran (48) ménagés dans les roues (49, 50, 51) du mécanisme (45) qui est disposé parallèlement à la plaquette à circuit imprimé (26).

10. Horloge-radio selon l'une des revendications précédentes, caractérisée en ce qu'est prévue une plaquette à circuits imprimés supplémentaire, décalée par rapport au plan médian de noyau (37), destinée à des circuits électriques qui ne sont mis en fonctionnement que sporadiquement et en particulier de façon temporellement décalée par rapport au fonctionnement du récepteur (42).

11. Horloge-radio selon l'une des revendications précédentes, caractérisée en ce que son noyau d'antenne (13) porte une plaquette à circuit imprimé (26) destinée à au moins les composants les plus importants des circuits électroniques, pour le fonctionnent garde-temps autonome de l'horloge, pour la réception les deux codages des informations de temps absolues, ainsi que pour le contrôle et, en cas de nécessité, la correction de l'affichage instantané du temps.
